# EUROPÄISCHE PATENTANMELDUNG

(11) **EP 3 839 904 A1**
(43) Veröffentlichungstag der Anmeldung: **23.06.2021**
(21) Anmeldenummer: 19217170.0
(22) Anmeldetag: 17.12.2019
(51) Int. Cl.: G07F 19/00, G06Q 20/18, G06Q 20/40, G06K 9/00

(54) **SELBSTBEDIENUNGSTERMINAL UND VERFAHREN ZUM BETREIBEN EINES SELBSTBEDIENUNGSTERMINALS**

(71) Anmelder: Wincor Nixdorf International GmbH, 33106 Paderborn (DE)
(72) Erfinder: WEIS, Eduard, 30102 Paderborn (DE); KNOBLOCH, Alexander, 33100 Paderborn (DE); ENGELNKEMPER, Sebastian, 33449 Langenberg (DE)
(74) Vertreter: Viering, Jentschura & Partner mbB Patent- und Rechtsanwälte

(57) **Zusammenfassung**

Ein Selbstbedienungsterminal (100) und ein Verfahren (300, 600) zum Betreiben eines Selbstbedienungsterminals werden offenbart, wobei das Selbstbedienungsterminal (100) aufweist: eine Bildgebungsvorrichtung (102), eingerichtet zum Bereitstellen von mindestens einem digitalen Bild (104); mindestens einen Prozessor (100), eingerichtet zum: Ermitteln, ob das mindestens eine digitale Bild (104) ein Gesicht einer Person aufweist; und falls das mindestens eine digitale Bild (104) das Gesicht der Person aufweist, Ausschneiden eines Bildbereichs aus dem mindestens einen digitalen Bild (104), der das Gesicht der Person aufweist; und eine Speichervorrichtung (108), eingerichtet zum Speichern des Bildbereichs.

## Beschreibung

Verschiedene Ausführungsbeispiele betreffen ein Selbstbedienungsterminal und ein Verfahren zum Betreiben eines Selbstbedienungsterminals.

An einem Selbstbedienungsterminal, wie beispielsweise einem Bankautomaten, kann ein Benutzer verschiedene Dienstleistungen ohne Interaktion mit einer zusätzlichen Person in Anspruch nehmen. Dabei kann es erforderlich sein, dass im Nachhinein ein Nachweis verfügbar ist, um eine durch den Benutzer durchgeführt Interaktion zu bestätigen bzw. zu beweisen. Beispielsweise kann es erforderlich sein, zu beweisen, dass ein Benutzer Geld an einem Geldautomaten abgehoben hat. Dafür können während des Benutzens des Selbstbedienungsterminals beispielsweise Bilddaten aufgenommen werden. Da dies hohe Speichermengen erfordert, werden nur Einzelbilder gespeichert. Allerdings kann es vorkommen, dass der Benutzer auf den gespeicherten Einzelbildern nicht eindeutig erkennbar ist, sodass die durch den Benutzer durchgeführte Interaktion nicht bestätigt werden kann. Daher kann es erforderlich sein, Bilddaten zu speichern, welche eine Identifikation des Benutzers sicher ermöglichen. Ferner kann es zur Erhöhung der Speichereffizienz erforderlich sein, die zu speichernde Datenmenge zu reduzieren.

Gemäß verschiedenen Ausführungsformen werden ein Selbstbedienungsterminal und ein Verfahren zum Betreiben eines Selbstbedienungsterminals bereitgestellt, die imstande sind, einen Benutzer eines Selbstbedienungsterminals zu bestätigen, insbesondere retrospektiv zu bestätigen.

Gemäß verschiedenen Ausführungsformen weist ein Selbstbedienungsterminal auf: eine Bildgebungsvorrichtung, eingerichtet zum Bereitstellen von mindestens einem digitalen Bild; mindestens einen Prozessor, eingerichtet zum: Ermitteln, ob das mindestens eine digitale Bild ein Gesicht einer Person aufweist, und falls das mindestens eine digitale Bild das Gesicht der Person aufweist, Ausschneiden eines Bildbereichs aus dem mindestens einen digitalen Bild, der das Gesicht der Person aufweist; und eine Speichervorrichtung, eingerichtet zum Speichern des Bildbereichs.

Das Selbstbedienungsterminal mit den Merkmalen des unabhängigen Anspruchs 1 bildet ein erstes Beispiel.

Das Ausschneiden des Bildbereiches aus einem digitalen Bild und Speichern des Bildbereiches anstatt des digitalen Bildes hat den Effekt, dass die zu speichernde Datenmenge reduziert wird. Ferner hat dies den Effekt, dass sichergestellt wird, dass nur Daten gespeichert werden, die das Gesicht einer Person zeigen. Der gespeicherte Bildbereich kann von dem Selbstbedienungsterminal an einen externen Server (zum Beispiel eine Speichervorrichtung eines externen Servers) übermittelt werden, beispielsweise über ein lokales Netzwerk (z.B. LAN) oder ein weltweites Netzwerk (z.B. GAN, z.B. Internet) übermittelt werden. In diesem Fall hat es ferner den Effekt, dass die zu übermittelnde Datenmenge reduziert wird.

Das Selbstbedienungsterminal kann mindestens einen Bildgebungssensor aufweisen. Der mindestens eine Bildgebungssensor kann ein Kamera-Sensor und/oder ein Videokamera-Sensor sein. Die in diesem Absatz beschriebenen Merkmale in Kombination mit dem ersten Beispiel bilden ein zweites Beispiel.

Der mindestens eine Prozessor kann ferner eingerichtet sein, um das mindestens eine digitale Bild zu verwerfen, falls das mindestens eine digitale Bild kein Gesicht einer Person aufweist. Das in diesem Absatz beschriebene Merkmal in Kombination mit dem ersten Beispiel oder dem zweiten Beispiel bildet ein drittes Beispiel.

Der mindestens eine Prozessor kann ferner eingerichtet sein, um, falls das mindestens eine digitale Bild das Gesicht der Person aufweist, zu ermitteln, ob der ausgeschnittene Bildbereich einem vordefinierten Kriterium genügt. Das vordefinierte Kriterium kann ein vordefiniertes Bildqualitätskriterium und/oder ein vordefiniertes Erkennbarkeitskriterium sein. Der mindestens eine Prozessor kann ferner eingerichtet sein, um den ausgeschnittenen Bildbereich nur zu speichern, falls der ausgeschnittene Bildbereich dem vordefinierten Kriterium genügt. Dies hat den Effekt, dass die zu speichernde Datenmenge zusätzlich reduziert wird. Ferner hat dies den Effekt, dass sichergestellt wird, dass das in dem Bildbereich dargestellte Gesicht erkennbar ist. Die in diesem Absatz beschriebenen Merkmale in Kombination mit einem oder mehreren des ersten Beispiels bis dem dritten Beispiel bilden ein viertes Beispiel.

Der mindestens eine Prozessor kann ferner eingerichtet sein, um den Bildbereich zu verwerfen, falls der ausgeschnittene Bildbereich nicht dem vordefinierten Bildqualitätskriterium und/oder nicht dem vordefinierten Erkennbarkeitskriterium genügt. Das in diesem Absatz beschriebene Merkmal in Kombination mit dem vierten Beispiel bildet ein fünftes Beispiel.

Das Bildqualitätskriterium des Bildbereiches kann mindestens einen der folgenden Parameter aufweisen: Schärfe, Helligkeit, Kontrast. Das Bildqualitätskriterium des Bildbereiches kann zusätzliche quantifizierbare Bildqualitätsmerkmale aufweisen. Die in diesem Absatz beschriebenen Merkmale in Kombination mit dem vierten Beispiel oder dem fünften Beispiel bilden ein sechstes Beispiel.

Das Erkennbarkeitskriterium kann die Erkennbarkeit des Gesichtes der Person in dem Bildbereich aufweisen. Das Erkennbarkeitskriterium kann mindestens einen der folgenden Parameter aufweisen: Verdeckungsgrad des Gesichtes, Blickwinkel. Das Erkennbarkeitskriterium kann zusätzliche quantifizierbare Merkmale, die die Identifikation einer Person erschweren, zum Beispiel verhindern, aufweisen. Die in diesem Absatz beschriebenen Merkmale in Kombination mit einem oder mehreren des vierten Beispiels bis dem sechsten Beispiel bilden ein siebtes Beispiel.

Das Selbstbedienungsterminal kann ein Bankautomat, eine Selbstbedienungskasse oder ein Selbstbedienungskiosk sein. Die in diesem Absatz beschriebenen Merkmale in Kombination mit einem oder mehreren des ersten Beispiels bis dem siebten Beispiel bilden ein achtes Beispiel.

Die Speichervorrichtung kann eingerichtet sein, den Bildbereich des mindestens einen digitalen Bildes in einer Bilddatenbank zu speichern. Das in diesem Absatz beschriebene Merkmal in Kombination mit einem oder mehreren des ersten Beispiels bis dem achten Beispiel bildet ein neuntes Beispiel.

Die Speichervorrichtung kann ferner eingerichtet sein, um eine Uhrzeit, zu welcher das Bild mittels der Bildgebungsvorrichtung detektiert wurde, und/oder eine dem Bildbereich zugeordnete Vorgangsnummer in Verbindung mit dem Bildbereich in der Bilddatenbank zu speichern. Die in diesem Absatz beschriebenen Merkmale in Kombination mit dem neunten Beispiel bilden ein zehntes Beispiel.

Die Vorgangsnummer kann eine Banktransaktionsnummer sein. Das in diesem Absatz beschriebene Merkmal in Kombination mit dem zehnten Beispiel bildet ein elftes Beispiel.

Der mindestens eine Prozessor kann eingerichtet sein, um mittels eines Gesichtserkennungsalgorithmus zu ermitteln, ob das mindestens eine digitale Bild ein Gesicht einer Person aufweist. Das in diesem Absatz beschriebene Merkmal in Kombination mit einem oder mehreren des ersten Beispiels bis dem elften Beispiel bildet ein zwölftes Beispiel.

Das mindestens eine digitale Bild kann eine Sequenz von digitalen Bildern sein. Das in diesem Absatz beschriebene Merkmal in Kombination mit einem oder mehreren des ersten Beispiels bis dem zwölften Beispiel bildet ein dreizehntes Beispiel.

Der mindestens eine Prozessor kann eingerichtet sein, die Sequenz von Bildern zu verarbeiten und eine Sequenz von Bildbereichen bereitzustellen, und die Speichervorrichtung kann eingerichtet sein, die Sequenz von Bildbereichen zu speichern. Die in diesem Absatz beschriebenen Merkmale in Kombination mit dem dreizehnten Beispiel bilden ein vierzehntes Beispiel.

Die Speichervorrichtung kann einen nichtflüchtigen Speicher zum Speichern des Bildbereichs des mindestens einen digitalen Bildes aufweisen. Das in diesem Absatz beschriebene Merkmal in Kombination mit einem oder mehreren des ersten Beispiels bis dem vierzehnten Beispiel bildet ein fünfzehntes Beispiel.

Ein Verfahren zum Betreiben eines Selbstbedienungsterminals kann aufweisen: Detektieren von mindestens einem digitalen Bild; Ermitteln, ob das mindestens eine digitale Bild ein Gesicht einer Person aufweist; falls das mindestens eine digitale Bild das Gesicht der Person aufweist, Ausschneiden eines Bildbereichs aus dem mindestens einen digitalen Bild, der das Gesicht der Person aufweist; und Speichern des ausgeschnittenen Bildbereichs des mindestens einen digitalen Bildes. Das in diesem Absatz beschriebene Verfahren bildet ein sechzehntes Beispiel.

Der ausgeschnittene Bildbereich des mindestens einen digitalen Bildes kann in einem nichtflüchtigen Speicher gespeichert werden. Das in diesem Absatz beschriebene Merkmal in Kombination mit dem sechzehnten Beispiel bildet ein siebzehntes Beispiel.

Ein Verfahren zum Betreiben eines Selbstbedienungsterminals kann aufweisen: Detektieren von mindestens einem digitalen Bild; Ermitteln, ob das mindestens eine digitale Bild ein Gesicht einer Person aufweist; falls das mindestens eine digitale Bild das Gesicht der Person aufweist, Ausschneiden eines Bildbereichs aus dem mindestens einen digitalen Bild, der das Gesicht der Person aufweist; Ermitteln, ob der ausgeschnittene Bildbereich einem vordefinierten Kriterium genügt; und Speichern des ausgeschnittenen Bildbereichs des mindestens einen digitalen Bildes, falls der ausgeschnittene Bildbereich dem vordefinierten Kriterium genügt. Das in diesem Absatz beschriebene Verfahren bildet ein achtzehntes Beispiel.

Der ausgeschnittene Bildbereich, der dem vordefinierten Kriterium genügt, kann in einem nichtflüchtigen Speicher gespeichert werden. Das in diesem Absatz beschriebene Merkmal in Kombination mit dem achtzehnten Beispiel bildet ein neunzehntes Beispiel.

Es zeigen
- Figur 1: ein Selbstbedienungsterminal gemäß verschiedenen Ausführungsformen;
- Figur 2: ein Bildverarbeitungssystem gemäß verschiedenen Ausführungsformen;
- Figur 3: ein Verfahren zum Betreiben eines Selbstbedienungsterminals gemäß verschiedenen Ausführungsformen;
- Figur 4: einen zeitlichen Ablauf einer Bildverarbeitung gemäß verschiedenen Ausführungsformen;
- Figur 5: ein Bildverarbeitungssystem gemäß verschiedenen Ausführungsformen;
- Figur 6: ein Verfahren zum Betreiben eines Selbstbedienungsterminals gemäß verschiedenen Ausführungsformen;
- Figur 7: einen zeitlichen Ablauf einer Bildverarbeitung gemäß verschiedenen Ausführungsformen;

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann.

Der Begriff "Prozessor" kann als jede Art von Entität verstanden werden, die die Verarbeitung von Daten oder Signalen erlaubt. Die Daten oder Signale können beispielsweise gemäß zumindest einer (d.h. einer oder mehr als einer) spezifischen Funktion behandelt werden, die vom Prozessor ausgeführt wird. Ein Prozessor kann eine analoge Schaltung, eine digitale Schaltung, eine Mischsignalschaltung, eine Logikschaltung, einen Mikroprozessor, eine zentrale Verarbeitungseinheit (CPU), eine Grafikverarbeitungseinheit (GPU), einen digitalen Signalprozessor (DSP), eine programmierbare Gatter-Anordnung (FPGA), eine integrierte Schaltung oder eine beliebige Kombination davon aufweisen oder daraus gebildet sein. Jede andere Art der Implementierung der jeweiligen Funktionen, die nachstehend ausführlicher beschrieben werden, kann auch als Prozessor oder Logikschaltung verstanden werden. Es versteht sich, dass einer oder mehrere der hierin detailliert beschriebenen Verfahrensschritte von einem Prozessor ausgeführt (z.B. realisiert) werden können, durch eine oder mehrere spezifische Funktionen, die von dem Prozessor ausgeführt werden. Der Prozessor kann daher eingerichtet sein, eines der hierin beschriebenen Verfahren oder dessen Komponenten zur Informationsverarbeitung durchzuführen.

Verschiedene Ausführungsformen betreffen ein Selbstbedienungsterminal und ein Verfahren zum Betreiben eines Selbstbedienungsterminals. Zeitlich gesehen nach einer Benutzung eines Selbstbedienungsterminals durch einen Benutzer kann es erforderlich sein, den Benutzer zu identifizieren. Anschaulich werden ein Selbstbedienungsterminal und ein Verfahren bereitgestellt, die imstande sind, eine Identifikation eines Benutzers, beispielsweise retrospektiv, zu gewährleisten.

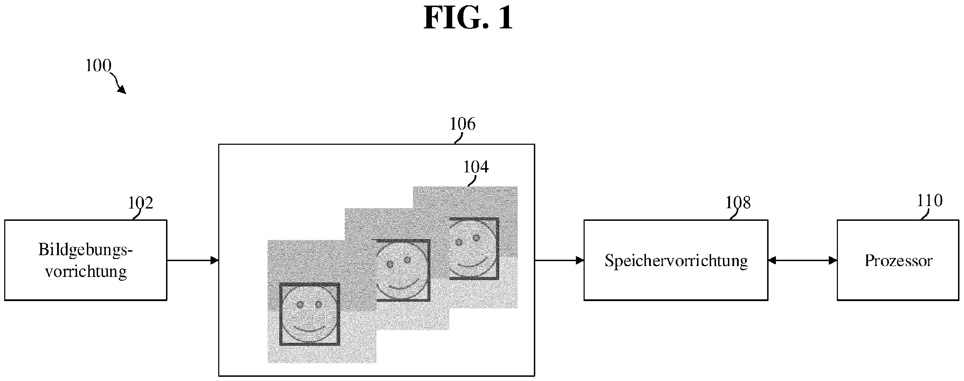

**FIG. 1** stellt ein Selbstbedienungsterminal 100 gemäß verschiedenen Ausführungsformen dar. Das Selbstbedienungsterminal 100 kann ein Bankautomat (ein Geldautomat), eine Selbstbedienungskasse oder ein Selbstbedienungskiosk sein. Das Selbstbedienungsterminal 100 kann eine Bildgebungsvorrichtung 102 aufweisen. Die Bildgebungsvorrichtung 102 kann eingerichtet sein, um mindestens ein digitales Bild 104 bereitzustellen, beispielsweise um mehrere digitale Bilder 106 bereitzustellen. Die Bildgebungsvorrichtung 102 kann ein oder mehrere Sensoren aufweisen. Die ein oder mehreren Sensoren können eingerichtet sein, um digitale Daten bereitzustellen. Die Bildgebungsvorrichtung 102 kann eingerichtet sein, um unter Verwendung der bereitgestellten digitalen Daten das mindestens eine digitale Bild 104 bzw. die mehreren digitalen Bilder 106 bereitzustellen. Gemäß verschiedenen Ausführungsformen weisen die digitalen Daten digitale Bilddaten auf. Die ein oder mehreren Sensoren können Bildgebungssensoren, wie beispielsweise ein Kamera-Sensor oder ein Video-Sensor, sein. Die Sensoren der mehreren Sensoren können die gleiche Art oder verschiedene Arten von Sensoren aufweisen. Die Bildgebungsvorrichtung 102 kann eingerichtet sein, um die digitalen Daten bzw. das mindestens eine digitale Bild 104 in Reaktion auf ein Ereignis zu detektieren. Das Selbstbedienungsterminal kann beispielsweise ein oder mehrere Bewegungssensoren aufweisen und das auslösende Ereignis kann eine mittels der ein oder mehreren Bewegungssensoren detektierte Bewegung sein. Das Selbstbedienungsterminal kann eine Bedienvorrichtung aufweisen, die eingerichtet ist, einer Person, wie beispielsweise einem Benutzer, eine Bedienung des Selbstbedienungsterminals zu ermöglichen, wobei das Ereignis ein durch den Benutzer ausgelöstes Ereignis, wie beispielsweise eine PIN-Eingabe an einem Bankautomaten, eine Auswahl an einem Selbstbedienungskiosk, das Auswählen bzw. Eingeben eines Produktes an einer Selbstbedienungskasse etc., sein kann.

Das Selbstbedienungsterminal 100 kann ferner eine Speichervorrichtung 108 aufweisen. Die Speichervorrichtung 108 kann zumindest einen Speicher aufweisen. Der Speicher kann beispielsweise bei der durch einen Prozessor durchgeführten Verarbeitung verwendet werden. Ein in den Ausführungsformen verwendeter Speicher kann ein flüchtiger Speicher, zum Beispiel ein DRAM (dynamischer Direktzugriffsspeicher), oder ein nichtflüchtiger Speicher, zum Beispiel ein PROM (programmierbarer Festwertspeicher), ein EPROM (löschbarer PROM), ein EEPROM (elektrisch löschbarer PROM) oder ein Flash-Speicher, wie beispielsweise eine Speichereinrichtung mit schwebendem Gate, eine ladungsabfangende Speichereinrichtung, ein MRAM (magnetoresistiver Direktzugriffsspeicher) oder ein PCRAM (Phasenwechsel-Direktzugriffsspeicher), sein. Die Speichervorrichtung 108 kann eingerichtet sein, um digitale Bilder, wie beispielsweise das mindestens eine digitale Bild 104 bzw. die mehreren digitalen Bilder 106, zu speichern.

Das Selbstbedienungsterminal 100 kann ferner mindestens einen Prozessor 110 aufweisen. Der mindestens eine Prozessor 110 kann, wie oben beschrieben, jede Art von Schaltung, d.h. jede Art von Logik-implementierender Entität, sein. Der Prozessor 110 kann eingerichtet sein, um das mindestens eine digitale Bild 104 bzw. die mehreren digitalen Bilder 106 zu verarbeiten.

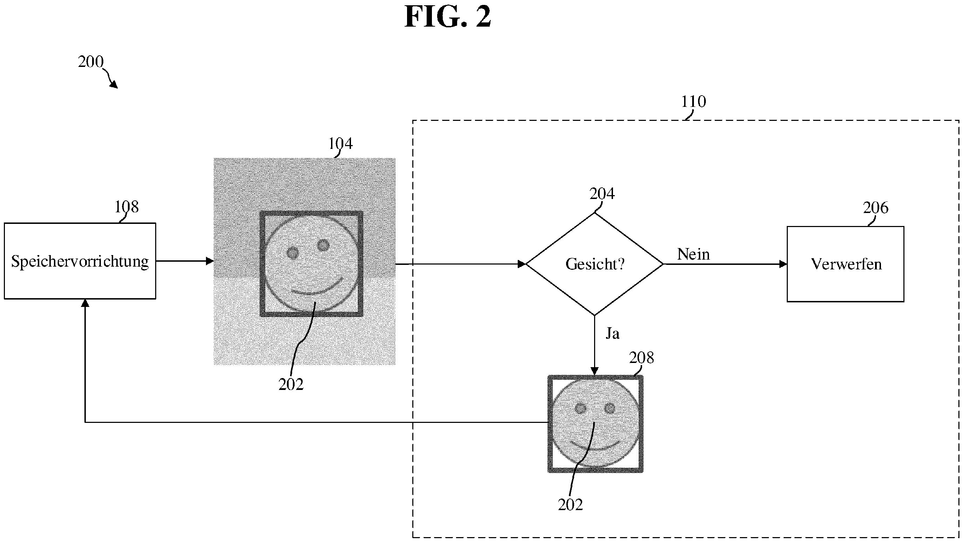

**FIG. 2** stellt ein Bildverarbeitungssystem 200 gemäß verschiedenen Ausführungsformen dar. Das Bildverarbeitungssystem 200 kann die Speichervorrichtung 108 aufweisen. Die Speichervorrichtung 108 kann eingerichtet sein, um digitale Bilder, wie beispielsweise das digitale Bild 104 bzw. die mehreren digitalen Bilder 106 zu speichern. Das Bildverarbeitungssystem 200 kann ferner den mindestens einen Prozessor 110 aufweisen. Die Speichervorrichtung 108 kann eingerichtet sein, um dem Prozessor 110 das mindestens eine digitale Bild 104 bereitzustellen und der Prozessor 110 kann eingerichtet sein, um das mindestens eine digitale Bild 104 zu verarbeiten.

Das mindestens eine digitale Bild 104 kann ein Gesicht 202 einer Person aufweisen. Der Prozessor 110 kann eingerichtet sein zum Ermitteln 204, ob das mindestens eine digitale Bild 104 ein Gesicht 202 einer Person aufweist. Das Ermitteln 204, ob das mindestens eine digitale Bild 104 ein Gesicht 202 einer Person aufweist, kann das Verwenden eines Gesichtserkennungsverfahren, beispielsweise eines Gesichtserkennungsalgorithmus, aufweisen. Das Gesichtserkennungsverfahren kann ein biometrisches Gesichtserkennungsverfahren sein. Das Gesichtserkennungsverfahren kann ein zweidimensionales Gesichtserkennungsverfahren oder ein dreidimensionales Gesichtserkennungsverfahren sein. Das Gesichtserkennungsverfahren kann unter Verwendung eines neuronalen Netzwerkes durchgeführt werden. Der Prozessor 110 kann ferner eingerichtet sein, um, falls das mindestens eine digitale Bild 104 das Gesicht 202 der Person aufweist, einen Bildbereich 208 aus dem mindestens einen digitalen Bild 104 auszuschneiden, wobei der Bildbereich 208 das Gesicht 202 der Person aufweisen kann.

Die Speichervorrichtung 108 kann ferner eingerichtet sein, um den Bildbereich 208 zu speichern. Wie oben beschrieben, kann die Speichervorrichtung 108 einen nichtflüchtigen Speicher aufweisen. Gemäß verschiedenen Ausführungsformen wird der Bildbereich 208 des mindestens einen digitalen Bildes 104 in dem nichtflüchtigen Speicher gespeichert. Die Speichervorrichtung 108 kann eingerichtet sein, um den Bildbereich 208 des mindestens einen digitalen Bildes 104 in einer Bilddatenbank zu speichern. Die Speichervorrichtung 108 kann ferner eingerichtet sein, um eine Uhrzeit, zu welcher das dem Bildbereich 208 zugeordnete mindestens eine digitale Bild 104 mittels der Bildgebungsvorrichtung 102 detektiert wurde, in Verbindung mit dem Bildbereich 208 in der Bilddatenbank zu speichern. Die Speichervorrichtung 108 kann ferner eingerichtet sein, um eine dem Bildbereich 208 zugeordnete Vorgangsnummer in Verbindung mit dem Bildbereich 208 in der Bilddatenbank zu speichern. Die Vorgangsnummer kann beispielsweise eine Banktransaktionsnummer sein.

Der Prozessor 110 kann ferner eingerichtet sein, um, falls das mindestens eine digitale Bild 104 kein Gesicht 202 einer Person aufweist, das mindestens eine digitale Bild 104 zu verwerfen 206, zum Beispiel zu löschen (d.h., der Prozessor 110 kann eingerichtet sein, um einen Befehl an die Speichervorrichtung 108 zu übermitteln, und die Speichervorrichtung 108 kann eingerichtet sein, um in Reaktion auf den Befehl das mindestens eine digitale Bild 104 zu löschen). Anders ausgedrückt, kann die Speichervorrichtung 108 das von der Bildgebungsvorrichtung bereitgestellte mindestens eine digitale Bild 104 speichern, beispielsweise flüchtig speichern, und der Prozessor 110 kann das gespeicherte, zum Beispiel flüchtig gespeicherte, mindestens eine digitale Bild 104 verwerfen 206 bzw. löschen, falls dieser ermittelt, dass das mindestens eine digitale Bild 104 kein Gesicht 202 einer Person aufweist, und kann einen Bildbereich 208 aus dem mindestens einen digitalen Bild 104 ausschneiden, falls dieser ermittelt, dass das mindestens eine digitale Bild 104 ein Gesicht 202 einer Person aufweist, und kann ferner den Bildbereich 208 in der Speichervorrichtung 108 speichern, zum Beispiel nichtflüchtig speichern. Der Prozessor 110 kann ferner eingerichtet sein, um das mindestens eine digitale Bild 104 zu verwerfen, zum Beispiel zu löschen (d.h., der Prozessor 110 kann einen Befehl an die Speichervorrichtung 108 übermitteln und die Speichervorrichtung 108 kann in Reaktion auf den Befehl das mindestens eine digitale Bild 104 löschen), nachdem der ausgeschnittene Bildbereich 208 in der Speichervorrichtung 108 gespeichert, beispielsweise nichtflüchtig gespeichert, wurde.

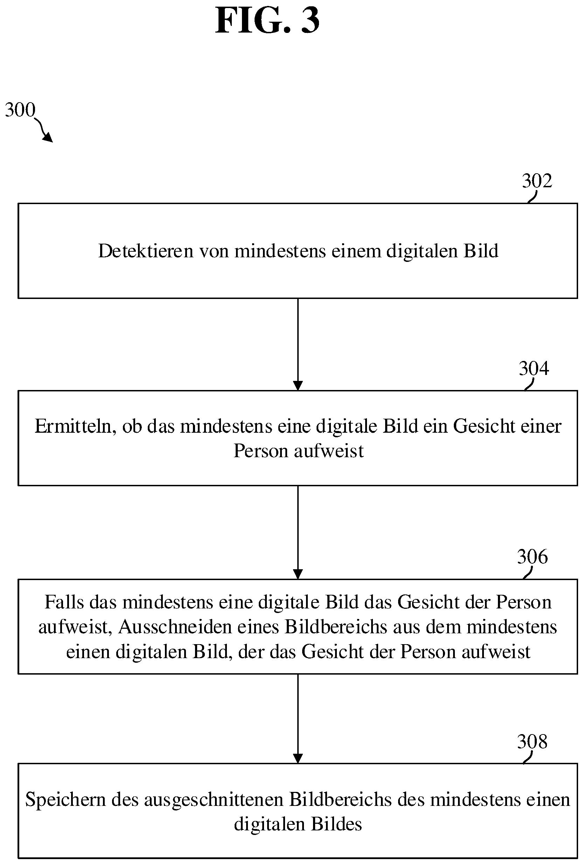

**FIG. 3** stellt ein Verfahren 300 zum Betreiben eines Selbstbedienungsterminals 100 gemäß verschiedenen Ausführungsformen dar. Das Verfahren 300 kann das Detektieren von mindestens einem digitalen Bild 104 aufweisen (in 302). Das mindestens eine digitale Bild 104 kann mittels der Bildgebungsvorrichtung 102 detektiert werden. Gemäß verschiedenen Ausführungsformen weist die Bildgebungsvorrichtung 102 mindestens einen Bildgebungssensor, wie beispielsweise einen Kamera-Sensor oder einen Video-Sensor, zum Detektieren von mindestens einem digitalen Bild 104 auf. Das Verfahren 300 kann ferner aufweisen: Ermitteln 204, ob das mindestens eine digitale Bild 104 ein Gesicht 202 einer Person aufweist (in 304). Das Verfahren 300 kann ferner aufweisen: falls das mindestens eine digitale Bild 104 das Gesicht 202 der Person aufweist, Ausschneiden eines Bildbereichs 208 aus dem mindestens einen digitalen Bild 104 (in 306), wobei der Bildbereich 208 das Gesicht 202 der Person aufweisen kann. Das Verfahren 300 kann ferner das Speichern des ausgeschnittenen Bildbereichs 208 des mindestens einen digitalen Bildes 104 aufweisen (in 308). Der ausgeschnittene Bildbereich 208 kann in einem nichtflüchtigen Speicher der Speichervorrichtung 108 gespeichert werden.

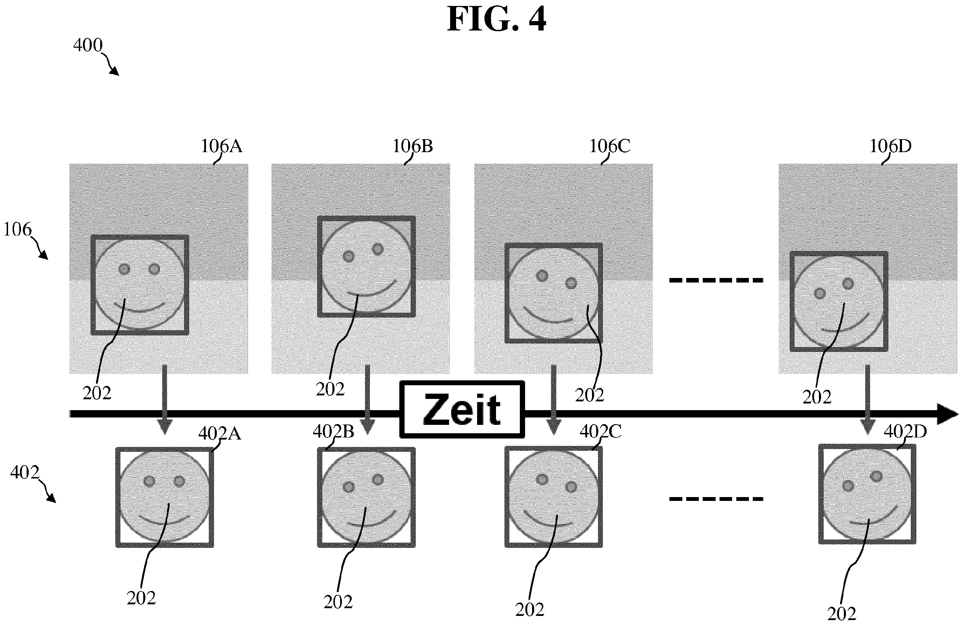

**FIG. 4** stellt einen zeitlichen Ablauf 400 einer Bildverarbeitung gemäß verschiedenen Ausführungsformen dar. Die Bildgebungsvorrichtung 102 kann eingerichtet sein, um mehrere digitale Bilder 106 bereitzustellen und die Speichervorrichtung 108 kann eingerichtet sein, um die mehreren digitalen Bilder 106 zu speichern. Die mehreren digitalen Bilder 106 können beispielsweise ein erstes digitales Bild 106A, ein zweites digitales Bild 106B, ein drittes digitales Bild 106C und ein viertes digitales Bild 106D aufweisen. Das erste digitale Bild 106A, das zweite digitale Bild 106B, das dritte digitale Bild 106C und/oder das vierte digitale Bild 106D können ein Gesicht 202 einer Person aufweisen. Das erste digitale Bild 106A, das zweite digitale Bild 106B, das dritte digitale Bild 106C und das vierte digitale Bild 106D können mittels der Bildgebungsvorrichtung 102 zu verschiedenen Zeitpunkten detektiert werden. Beispielsweise kann das zweite digitale Bild 106B zeitlich nach dem ersten digitalen Bild 106A detektiert werden, das dritte digitale Bild 106C kann zeitlich nach dem zweiten digitalen Bild 106B detektiert werden und das vierte digitale Bild 106D kann zeitlich nach dem dritten digitalen Bild 106C detektiert werden. Anders ausgedrückt können die mehreren digitalen Bilder 106 nacheinander detektiert werden. Die mehreren digitalen Bilder 106 können eine Sequenz von digitalen Bildern sein und der mindestens eine Prozessor 110 kann eingerichtet sein, um die Sequenz von digitalen Bildern zu verarbeiten. Anders ausgedrückt kann der Prozessor 110 eingerichtet sein, um jedes digitale Bild der mehreren digitalen Bilder 106 zu verarbeiten. Die Sequenz von Bildern kann beispielsweise ein Videostream sein. Der Prozessor 110 kann eingerichtet sein, um jedes digitale Bild der mehreren digitalen Bilder 106 nach dem Verfahren 300 zu verarbeiten. Das heißt, der Prozessor 110 kann eingerichtet sein, um für jedes digitale Bild der mehreren digitalen Bilder 106 zu ermitteln, ob das jeweilige digitale Bild ein Gesicht 202 einer Person aufweist, und um, falls das jeweilige digitale Bild das Gesicht 202 der Person aufweist, einen Bildbereich 208 aus dem jeweiligen digitalen Bild auszuschneiden, wobei der jeweilige Bildbereich 208 das Gesicht 202 der Person aufweist. Folglich kann der Prozessor 110, falls das erste digitale Bild 106A, das zweite digitale Bild 106B, das dritte digitale Bild 106C und das vierte digitale Bild 106D ein Gesicht 202 einer Person aufweisen, einen ersten Bildbereich 402A für das erste digitale Bild 106A, einen zweiten Bildbereich 402B für das zweite digitale Bild 106B, einen dritten Bildbereich 402C für das dritte digitale Bild 106C und einen vierten Bildbereich 402D für das vierte digitale Bild 106D bereitstellen. Die Speichervorrichtung 108 kann eingerichtet sein, um den ersten Bildbereich 402A, den zweiten Bildbereich 402B, den dritten Bildbereich 402C und den vierten Bildbereich 402D zu speichern, zum Beispiel nichtflüchtig zu speichern.

Das heißt, der Prozessor 110 kann eingerichtet sein, um für eine Sequenz von digitalen Bildern eine Sequenz von Bildbereichen bereitzustellen und die Speichervorrichtung 108 kann eingerichtet sein, um die Sequenz von Bildbereichen zu speichern.

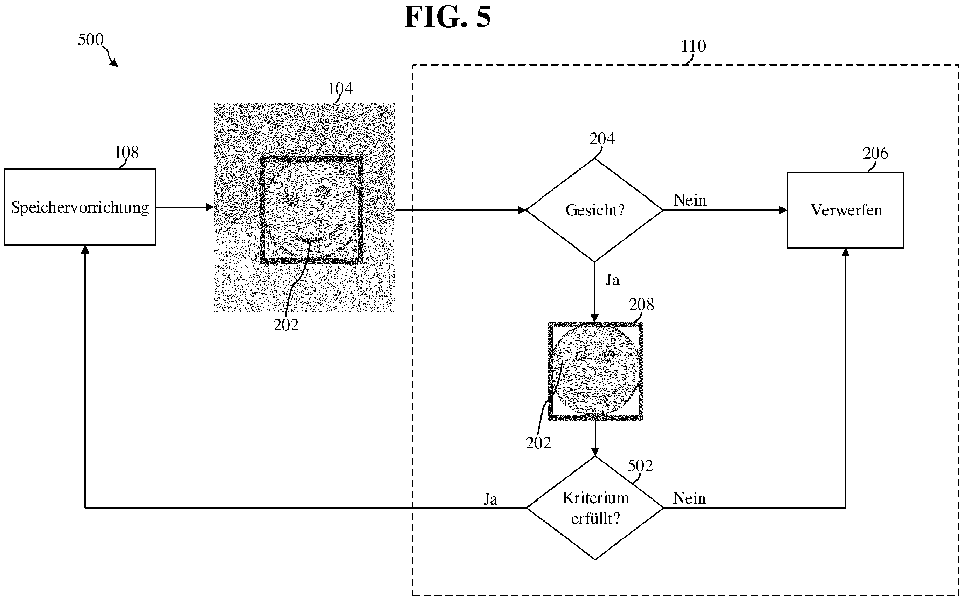

**FIG. 5** stellt ein Bildverarbeitungssystem 500 gemäß verschiedenen Ausführungsformen dar. Das Bildverarbeitungssystem 500 kann im Wesentlichen dem Bildverarbeitungssystem 200 entsprechen, wobei der Prozessor 110 ferner eingerichtet sein kann, um zu ermitteln, ob der ausgeschnittene Bildbereich 208 des mindestens einen digitalen Bildes 104 einem vordefinierten Kriterium 502 genügt. Der Prozessor 110 kann eingerichtet sein zum Ermitteln, ob der ausgeschnittene Bildbereich 208 einem vordefinierten Kriterium 502 genügt (d.h., ob ein vordefiniertes Kriterium 502 erfüllt ist) vor dem Speichern des Bildbereiches 208 in der Speichervorrichtung 108. Das vordefinierte Kriterium 502 kann ein Bildqualitätskriterium sein. Das Bildqualitätskriterium kann mindestens einen der folgenden Parameter aufweisen: eine Schärfe, eine Helligkeit, einen Kontrast. Das heißt, das Bildqualitätskriterium kann beispielsweise eine mindestens erforderliche Schärfe, eine mindestens erforderliche Helligkeit, eine maximal erlaubte Helligkeit und/oder einen mindestens erforderlichen Kontrast aufweisen. Die Schärfe kann zum Beispiel aufgrund einer Bewegungsunschärfe stark verringert sein. Das vordefinierte Kriterium 502 kann ein Erkennbarkeitskriterium sein. Das Erkennbarkeitskriterium kann eine Erkennbarkeit eines Gesichtes 202 einer Person in einem Bildbereich 208 aufweisen. Das heißt, das Erkennbarkeitskriterium kann angeben, ob bzw. wie gut das Gesicht 202 der Person zu erkennen ist. Das Erkennbarkeitskriterium kann mindestens einen der folgenden Parameter aufweisen: Verdeckungsgrad des Gesichtes 202, Blickwinkel. Anders ausgedrückt gibt das Erkennbarkeitskriterium an, ob eine Person anhand des Bildbereiches 208 identifiziert werden kann. Der Verdeckungsgrad des Gesichtes 202 kann angeben, wie viel Prozent und/oder welche Bereiche des Gesichtes 202 verdeckt sind und das Erkennbarkeitskriterium kann angeben, wie viel Prozent des Gesichtes 202 nicht verdeckt sein dürfen und/oder welche Bereiche des Gesichtes 202 nicht verdeckt sein dürfen. Der Blickwinkel kann angeben, unter welchem Winkel des Gesicht 202 bezüglich eines Bildgebungssensors, wie beispielsweise einer Kamera oder einer Videokamera, geneigt bzw. gedreht ist und das Erkennbarkeitskriterium kann angeben, wie groß der Winkel zwischen dem Bildgebungssensor und dem Gesicht 202 sein darf. Anders ausgedrückt, kann der Blickwinkel angeben, ob das Gesicht 202 (zum Beispiel das vollständige Gesicht) durch den Bildgebungssensor erkennbar ist.

Gemäß verschiedenen Ausführungsformen weist das vordefinierte Kriterium 502 das Bildqualitätskriterium und das Erkennbarkeitskriterium auf. Die Speichervorrichtung 108 kann eingerichtet sein, um den Bildbereich 208 des mindestens einen digitalen Bildes 104 zu speichern, falls der ausgeschnittene Bildbereich 208 dem vordefinierten Kriterium 502 (d.h., dem Bildqualitätskriterium und/oder dem Erkennbarkeitskriterium) genügt (d.h., dass das vordefinierte Kriterium 502 erfüllt ist, "Ja"). Die Speichervorrichtung 108 kann eingerichtet sein, um den Bildbereich 208 in einem nichtflüchtigen Speicher zu speichern.

Der Prozessor 110 kann ferner eingerichtet sein, um, falls der Bildbereich 208 nicht dem vordefinierten Kriterium 502 (d.h., nicht dem Bildqualitätskriterium und/oder nicht dem Erkennbarkeitskriterium) genügt, den Bildbereich 208 zu verwerfen 206, zum Beispiel zu löschen (d.h., der Prozessor 110 kann eingerichtet sein, um einen Befehl an die Speichervorrichtung 108 zu übermitteln, und die Speichervorrichtung 108 kann eingerichtet sein, um in Reaktion auf den Befehl den Bildbereich 208 zu löschen). Anders ausgedrückt, kann die Speichervorrichtung 108 das mindestens eine digitale Bild 104 und den ausgeschnittenen Bildbereich 208 speichern, beispielsweise flüchtig speichern, und der Prozessor 110 kann den gespeicherten, zum Beispiel flüchtig gespeicherte, Bildbereich 208 verwerfen 206 bzw. löschen, falls dieser ermittelt, dass der Bildbereich 208 das vordefinierte Kriterium 502 nicht erfüllt.

Gemäß verschiedenen Ausführungsformen kann die Bildgebungsvorrichtung 102 mehrere digitale Bilder 106 bereitstellen und der Prozessor 110 kann eingerichtet sein, um für jedes digitale Bild der mehreren digitalen Bilder 106 zu ermitteln 204, ob das jeweilige digitale Bild ein Gesicht einer Person aufweist. Der Prozessor 110 kann ferner eingerichtet sein, um aus jedem digitalen Bild, das ein Gesicht einer Person zeigt, einen Bildbereich auszuschneiden, wobei der Bildbereich das jeweilige Gesicht der jeweiligen Person aufweisen kann. Der Prozessor 110 kann ferner eingerichtet sein, um für jeden ausgeschnittenen Bildbereich der mehreren ausgeschnittenen Bildbereiche zu ermitteln, ob das vordefinierte Kriterium 502 erfüllt ist. Falls das vordefinierte Kriterium 502 für keinen ausgeschnittenen Bildbereich der mehreren ausgeschnittenen Bildbereiche erfüllt ist oder falls die Anzahl an ausgeschnittenen Bildbereichen der mehreren ausgeschnittenen Bildbereiche, die das vordefinierte Kriterium 502 erfüllen, geringer ist als eine vordefinierte Anzahl, kann der Prozessor 110 eingerichtet sein, um eine Bewertung (zum Beispiel durch Zuordnung einer Zahl, die ein Maß für die Bewertung darstellt), wie beispielsweise eine Bildqualitätsbewertung, für jeden ausgeschnittenen Bildbereich der mehreren ausgeschnittenen Bildbereiche zu ermitteln. Der Prozessor 110 kann eingerichtet sein, um die ausgeschnittenen Bildbereiche der mehreren Bildbereiche, die die höchste Bewertung bzw. die höchsten Bewertungen (zum Beispiel die größte zugeordnete Zahl bzw. die größten zugeordneten Zahlen) aufweisen, auszuwählen und in der Speichervorrichtung 108 zu speichern. Die Anzahl an ausgewählten ausgeschnittenen Bildbereichen mit den höchsten Bewertungen kann der vordefinierten Anzahl entsprechen. Die Anzahl an ausgewählten ausgeschnittenen Bildbereichen mit den höchsten Bewertungen kann einer vordefinierten Auswahlanzahl entsprechen, wobei die vordefinierte Auswahlanzahl größer sein kann als die vordefinierte Anzahl. Gemäß verschiedenen Ausführungsformen kann die Bildgebungsvorrichtung 102 eingerichtet sein, um ein zusätzliches digitales Bild bereitzustellen, wobei das zusätzliche digitale Bild zeitlich gesehen nach dem Speichern der ausgewählten digitalen Bildbereiche bereitgestellt werden kann. Der Prozessor 110 kann ermitteln, dass das zusätzliche digitale Bild ein Gesicht einer Person aufweist und einen zusätzlichen Bildbereich aus dem zusätzlichen digitalen Bild ausschneiden. Der Prozessor 110 kann ferner ermitteln, dass der zusätzliche Bildbereich das vordefinierte Kriterium 502 erfüllt oder dass der zusätzliche Bildbereich eine höhere Bewertung (d.h., eine größere zugeordnete Zahl) als mindestens ein gespeicherter Bildbereich der mehreren gespeicherten Bildbereiche aufweist. Der Prozessor 110 kann eingerichtet sein, um den zusätzlichen Bildbereich in der Speichervorrichtung 108 zu speichern. Der Prozessor 110 kann ferner eingerichtet sein, um einen gespeicherten Bildbereich der mehreren gespeicherten Bildbereiche zu löschen, falls dieser gespeicherte Bildbereich eine niedrigere Bewertung (d.h., eine kleinere zugeordnete Zahl) als der zusätzliche Bildbereich aufweist. Das hat den Effekt, dass sichergestellt wird, dass unabhängig von der Bildqualität mindestens ein ausgeschnittener Bildbereich gespeichert wird, der ein Gesicht einer Person zeigt. Ferner wird sichergestellt, dass der mindestens eine gespeicherte Bildbereich die beste verfügbare Bildqualität aufweist, d.h., die beste Bildqualität der mehreren Bildbereich der mehreren detektierten digitalen Bilder.

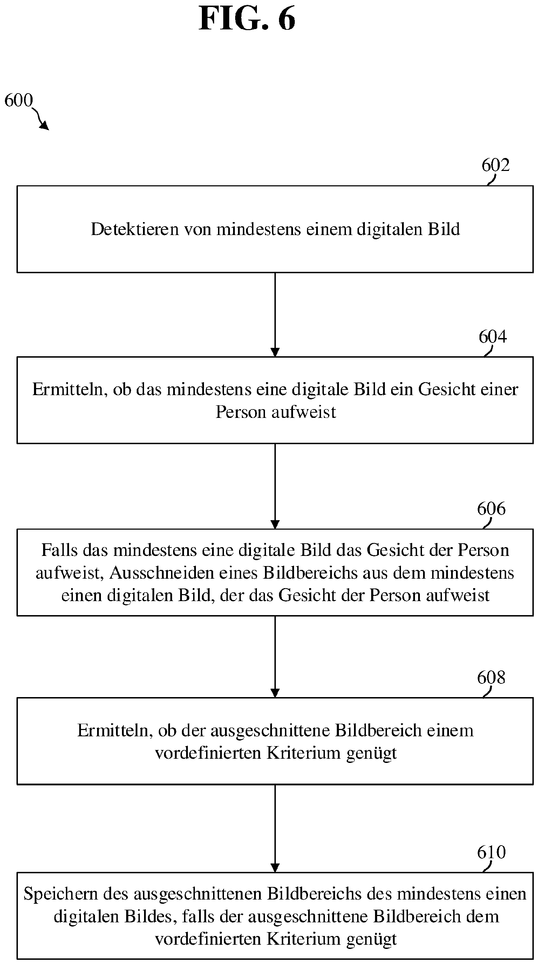

**FIG. 6** stellt ein Verfahren 600 zum Betreiben eines Selbstbedienungsterminals 100 gemäß verschiedenen Ausführungsformen dar. Das Verfahren 600 kann das Detektieren von mindestens einem digitalen Bild 104 aufweisen (in 602). Das mindestens eine digitale Bild 104 kann mittels der Bildgebungsvorrichtung 102 detektiert werden. Gemäß verschiedenen Ausführungsformen weist die Bildgebungsvorrichtung 102 mindestens einen Bildgebungssensor, wie beispielsweise einen Kamera-Sensor oder einen Video-Sensor, zum Detektieren von mindestens einem digitalen Bild 104 auf. Das Verfahren 600 kann ferner aufweisen: Ermitteln 204, ob das mindestens eine digitale Bild 104 ein Gesicht 202 einer Person aufweist (in 604). Das Verfahren 600 kann ferner aufweisen: falls das mindestens eine digitale Bild 104 das Gesicht 202 der Person aufweist, Ausschneiden eines Bildbereichs 208 aus dem mindestens einen digitalen Bild 104 (in 606), wobei der Bildbereich 208 das Gesicht 202 der Person aufweisen kann. Das Verfahren 600 kann ferner das Ermitteln, ob der ausgeschnittene Bildbereich 208 einem vordefinierten Kriterium 502 genügt, aufweisen (in 608). Das vordefinierte Kriterium 502 kann ein Bildqualitätskriterium sein, das beispielsweise eine Schärfe, eine Helligkeit und/oder einen Kontrast aufweist. Das vordefinierte Kriterium 502 kann ein Erkennbarkeitskriterium sein, das eine Erkennbarkeit eines Gesichtes 202 einer Person in einem Bildbereich 208 aufweist. Das Kriterium 502 kann das Bildqualitätskriterium und das Erkennbarkeitskriterium aufweisen. Das Verfahren 600 kann ferner das Speichern des ausgeschnittenen Bildbereichs 208 des mindestens einen digitalen Bildes 104 aufweisen, falls der ausgeschnittene Bildbereich 208 dem vordefinierten Kriterium 502 genügt, d.h. das vordefinierte Kriterium 502 erfüllt (in 610). Der ausgeschnittene Bildbereich 208 kann in einem nichtflüchtigen Speicher der Speichervorrichtung 108 gespeichert werden.

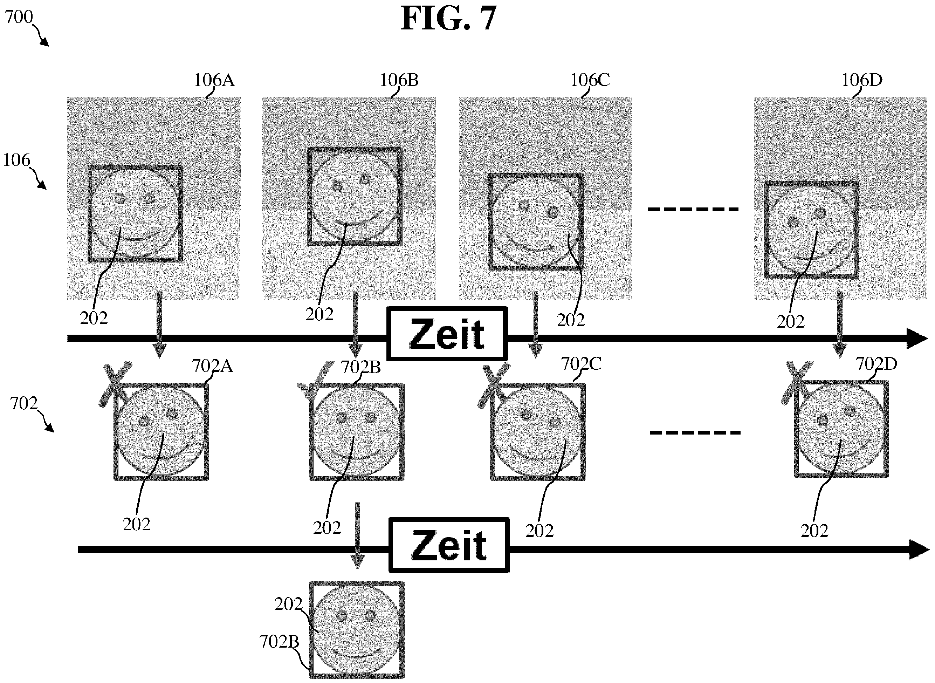

**FIG. 7** stellt einen zeitlichen Ablauf 700 einer Bildverarbeitung gemäß verschiedenen Ausführungsformen dar. Die Bildgebungsvorrichtung 102 kann eingerichtet sein, um mehrere digitale Bilder 106 bereitzustellen und die Speichervorrichtung 108 kann eingerichtet sein, um die mehreren digitalen Bilder 106 zu speichern. Die mehreren digitalen Bilder 106 können beispielsweise ein erstes digitales Bild 106A, ein zweites digitales Bild 106B, ein drittes digitales Bild 106C und ein viertes digitales Bild 106D aufweisen. Das erste digitale Bild 106A, das zweite digitale Bild 106B, das dritte digitale Bild 106C und/oder das vierte digitale Bild 106D können ein Gesicht 202 einer Person aufweisen. Das erste digitale Bild 106A, das zweite digitale Bild 106B, das dritte digitale Bild 106C und das vierte digitale Bild 106D können mittels der Bildgebungsvorrichtung 102 zu verschiedenen Zeitpunkten detektiert werden. Beispielsweise kann das zweite digitale Bild 106B zeitlich nach dem ersten digitalen Bild 106A detektiert werden, das dritte digitale Bild 106C kann zeitlich nach dem zweiten digitalen Bild 106B detektiert werden und das vierte digitale Bild 106D kann zeitlich nach dem dritten digitalen Bild 106C detektiert werden. Anders ausgedrückt können die mehreren digitalen Bilder 106 nacheinander detektiert werden. Die mehreren digitalen Bilder 106 können eine Sequenz von digitalen Bildern sein und der mindestens eine Prozessor 110 kann eingerichtet sein, um die Sequenz von digitalen Bildern zu verarbeiten. Anders ausgedrückt kann der Prozessor 110 eingerichtet sein, um jedes digitale Bild der mehreren digitalen Bilder 106 zu verarbeiten. Der Prozessor 110 kann eingerichtet sein, um jedes digitale Bild der mehreren digitalen Bilder 106 nach dem Verfahren 600 zu verarbeiten. Das heißt, der Prozessor 110 kann eingerichtet sein, um für jedes digitale Bild der mehreren digitalen Bilder 106 zu ermitteln, ob das jeweilige digitale Bild ein Gesicht 202 einer Person aufweist, und um, falls das jeweilige digitale Bild das Gesicht 202 der Person aufweist, einen Bildbereich 208 aus dem jeweiligen digitalen Bild auszuschneiden, wobei der jeweilige Bildbereich 208 das Gesicht 202 der Person aufweist. Folglich kann der Prozessor 110, falls das erste digitale Bild 106A, das zweite digitale Bild 106B, das dritte digitale Bild 106C und das vierte digitale Bild 106D ein Gesicht 202 einer Person aufweisen, einen ersten Bildbereich 702A für das erste digitale Bild 106A, einen zweiten Bildbereich 702B für das zweite digitale Bild 106B, einen dritten Bildbereich 702C für das dritte digitale Bild 106C und einen vierten Bildbereich 702D für das vierte digitale Bild 106D bereitstellen. Der Prozessor 110 kann gemäß dem Verfahren 600 ferner eingerichtet sein, um für jeden ausgeschnittenen Bildbereich der mehreren ausgeschnittenen Bildbereiche (702A, 702B, 702C, 702D) zu ermitteln, ob der ausgeschnittene Bildbereich (702A, 702B, 702C, 702D) einem vordefinierten Kriterium 502 genügt, d.h., ob das vordefinierte Kriterium 502 erfüllt ist, wobei das vordefinierte Kriterium 502 beispielsweise ein Bildqualitätskriterium und/oder ein Erkennbarkeitskriterium sein kann. Die Speichervorrichtung 108 kann eingerichtet sein, um einen ausgeschnittenen Bildbereich der mehreren Bildbereiche (702A, 702B, 702C, 702D) zu speichern, falls der jeweilige Bildbereich dem vordefinierten Kriterium 502 genügt, wobei die Speichervorrichtung 108 eingerichtet sein kann, um den jeweiligen Bildbereich in einem nichtflüchtigen Speicher zu speichern.

Der Prozessor 110 kann ferner eingerichtet sein, um, falls ein jeweiliger Bildbereich nicht dem vordefinierten Kriterium 502 (d.h., nicht dem Bildqualitätskriterium und/oder nicht dem Erkennbarkeitskriterium) genügt, den Bildbereich zu verwerfen, zum Beispiel zu löschen (d.h., der Prozessor 110 kann eingerichtet sein, um einen Befehl an die Speichervorrichtung 108 zu übermitteln, und die Speichervorrichtung 108 kann eingerichtet sein, um in Reaktion auf den Befehl das mindestens eine digitale Bild 104 zu löschen). Anders ausgedrückt, kann die Speichervorrichtung 108 das mindestens eine digitale Bild 104 und den jeweiligen ausgeschnittenen Bildbereich speichern, beispielsweise flüchtig speichern, und der Prozessor 110 kann den gespeicherten, zum Beispiel flüchtig gespeicherte, Bildbereich verwerfen bzw. löschen, falls dieser ermittelt, dass der Bildbereich das vordefinierte Kriterium 502 nicht erfüllt.

Wie in FIG. 7 anschaulich dargestellt, können beispielsweise der erste Bildbereich 702A, der dritte Bildbereich 702C und der vierten Bildbereich 702D das vordefinierte Kriterium 502 nicht erfüllen und der zweite Bildbereich 702B kann das vordefinierte Kriterium 502 erfüllen und die Speichervorrichtung 108 kann eingerichtet sein, um den zweiten Bildbereich 702B zu speichern, beispielsweise nichtflüchtig zu speichern. Der Prozessor 110 kann eingerichtet sein, um den ersten Bildbereich 702A, den dritten Bildbereich 702C und den vierten Bildbereich 702D zu verwerfen bzw. die Speichervorrichtung 108 kann den ersten Bildbereich 702A, den dritten Bildbereich 702C und den vierten Bildbereich 702D löschen.

## Patentansprüche

1. Selbstbedienungsterminal (100), aufweisend:
• eine Bildgebungsvorrichtung (102), eingerichtet zum Bereitstellen von mindestens einem digitalen Bild (104) ;
• mindestens einen Prozessor (110), eingerichtet zum:
o Ermitteln, ob das mindestens eine digitale Bild (104) ein Gesicht einer Person aufweist;
o falls das mindestens eine digitale Bild (104) das Gesicht der Person aufweist, Ausschneiden eines Bildbereichs aus dem mindestens einen digitalen Bild (104), der das Gesicht der Person aufweist; und
• eine Speichervorrichtung (108), eingerichtet zum Speichern des Bildbereichs.

2. Selbstbedienungsterminal (100) nach Anspruch 1, wobei der mindestens eine Prozessor (110) ferner eingerichtet ist zum: Verwerfen des mindestens einen digitalen Bildes (104), falls das mindestens eine digitale Bild (104) kein Gesicht einer Person aufweist.

3. Selbstbedienungsterminal (100) nach einem der Ansprüche 1 oder 2, wobei der mindestens eine Prozessor (110) ferner eingerichtet ist zum:
• falls das mindestens eine digitale Bild (104) das Gesicht der Person aufweist, Ermitteln, ob der ausgeschnittene Bildbereich einem vordefinierten Kriterium genügt; und
• Speichern des Bildbereiches nur, falls der ausgeschnittene Bildbereich dem vordefinierten Kriterium genügt.

4. Selbstbedienungsterminal (100) nach Anspruch 3, wobei der mindestens eine Prozessor (110) ferner eingerichtet ist zum: Verwerfen des Bildbereiches, falls der ausgeschnittene Bildbereich nicht dem vordefinierten Kriterium genügt oder wobei der mindestens eine Prozessor (110) eingerichtet ist zum: Auswählen des Bildbereiches unter Verwendung einer Bildqualitätsbewertung und Speichern des ausgewählten Bildbereiches.

5. Selbstbedienungsterminal (100) nach einem der Ansprüche 3 oder 4, wobei das vordefinierte Kriterium ein vordefiniertes Bildqualitätskriterium des Bildbereiches aufweist und wobei das vordefinierte Bildqualitätskriterium optional mindestens einen der folgenden Parameter aufweist: Schärfe, Helligkeit, Kontrast.

6. Selbstbedienungsterminal (100) nach einem der Ansprüche 3 bis 5, wobei das vordefinierte Kriterium ein vordefiniertes Erkennbarkeitskriterium aufweist, das die Erkennbarkeit des Gesichtes der Person in dem Bildbereich aufweist, und wobei optional das Erkennbarkeitskriterium mindestens einen der folgenden Parameter aufweist: Verdeckungsgrad des Gesichtes, Blickwinkel.

7. Selbstbedienungsterminal (100) nach einem der Ansprüche 1 bis 6, wobei das Selbstbedienungsterminal (100) ein Bankautomat, eine Selbstbedienungskasse oder ein Selbstbedienungskiosk ist.

8. Selbstbedienungsterminal (100) nach einem der Ansprüche 1 bis 7, wobei die Speichervorrichtung (108) eingerichtet ist, den Bildbereich des mindestens einen digitalen Bildes (104) in einer Bilddatenbank zu speichern.

9. Selbstbedienungsterminal (100) nach Anspruch 8, wobei die Speichervorrichtung (108) ferner eingerichtet ist zum Speichern von einer Uhrzeit, zu welcher das Bild mittels der Bildgebungsvorrichtung (102) detektiert wurde, und/oder von einer dem Bildbereich zugeordneten Vorgangsnummer in Verbindung mit dem Bildbereich in der Bilddatenbank.

10. Selbstbedienungsterminal (100) nach einem der Ansprüche 1 bis 9, wobei der mindestens eine Prozessor (110) eingerichtet ist zum Ermitteln, ob das mindestens eine digitale Bild (104) ein Gesicht einer Person aufweist, mittels eines Gesichtserkennungsalgorithmus.

11. Selbstbedienungsterminal (100) nach einem der Ansprüche 1 bis 10, wobei das mindestens eine digitale Bild (104) eine Sequenz von digitalen Bildern ist.

12. Selbstbedienungsterminal (100) nach Anspruch 11, wobei der Prozessor (110) eingerichtet ist, die Sequenz von Bildern zu verarbeiten und eine Sequenz von Bildbereichen bereitzustellen, und wobei die Speichervorrichtung (108) eingerichtet ist, die Sequenz von Bildbereichen zu speichern.

13. Selbstbedienungsterminal (100) nach einem der Ansprüche 1 bis 12, wobei die Speichervorrichtung (108) einen nichtflüchtigen Speicher zum Speichern des Bildbereichs des mindestens einen digitalen Bildes (104) aufweist.

14. Verfahren zum Betreiben eines Selbstbedienungsterminals (100), aufweisend:
• Detektieren von mindestens einem digitalen Bild (104) ;
• Ermitteln, ob das mindestens eine digitale Bild (104) ein Gesicht einer Person aufweist;
• falls das mindestens eine digitale Bild (104) das Gesicht der Person aufweist, Ausschneiden eines Bildbereichs aus dem mindestens einen digitalen Bild (104), der das Gesicht der Person aufweist; und
• Speichern des ausgeschnittenen Bildbereichs des mindestens einen digitalen Bildes (104).

15. Verfahren nach Anspruch 16, wobei der ausgeschnittene Bildbereich des mindestens einen digitalen Bildes (104) in einem nichtflüchtigen Speicher gespeichert wird.
